# EUROPEAN PATENT APPLICATION

(11) **EP 3 379 379 A1**
(43) Date of publication of application: **26.09.2018**
(21) Application number: 17162705.2
(22) Date of filing: 24.03.2017
(51) Int. Cl.: G06F 3/01

(54) **VIRTUAL REALITY SYSTEM AND METHOD**

(71) Applicant: Nokia Technologies Oy, 02610 Espoo (FI)
(72) Inventor: MATE, Sujeet Shyamsundar, 33720 Tampere (FI); LEHTINIEMI, Arto, 33880 Lempäälä (FI); ERONEN, Antti, 33820 Tampere (FI); LEPPÄNEN, Jussi, 33580 Tampere (FI)
(74) Representative: Nokia EPO representatives

(57) **Abstract**

An apparatus comprising:
at least one processor; and
at least one memory including computer program code,
the at least one memory and the computer program code configured to, with the at least one processor, cause the apparatus to perform at least the following:
based on virtual reality content comprising visual imagery and audio of a scene for presentation in virtual reality to thereby provide a virtual reality space representative of the scene, and capture property modification data comprising information indicative of one or more proposed modifications to be applied to the virtual reality content for subsequent viewing in virtual reality, the one or more modifications relating to one or more of an aural presentation of at least a part of the audio and a visual presentation of at least part of the visual imagery of the virtual reality content, the capture property modification data further comprising, for each of the one or more modifications, information indicative of a modification time, relative to the virtual reality content, at which the proposed modification has effect and a virtual location in the virtual reality space affected by the modification;
provide for presentation of the virtual reality content in virtual reality to a reviewing user with the proposed modifications made to the virtual reality content and one or more modification graphics indicative of the proposed modifications, the one or more modification graphics presented based on the modification time and positioned in the virtual reality space in accordance with the virtual location.

## Description

### Technical Field

The present disclosure relates to the field of virtual reality and, in particular, to the field of review of modifications to capture properties of virtual reality content in a virtual or augmented reality view, associated methods, computer programs and apparatus.

### Background

The capture of virtual reality content is becoming more common, with virtual reality content producers producing live and recorded virtual reality content. Ensuring such virtual reality content has high production values is important. The capture of virtual reality content may require modification of capture properties to improve or modify the virtual reality content, such as to allow a content producer to create quality content and/or achieve a desired stylistic effect in the resultant virtual reality content.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

In a first example aspect there is provided an apparatus comprising:
at least one processor; and
at least one memory including computer program code,
the at least one memory and the computer program code configured to, with the at least one processor, cause the apparatus to perform at least the following:
   based on virtual reality content comprising visual imagery and audio of a scene for presentation in virtual reality to provide a virtual reality space in which the visual imagery is displayed to represent the scene, and capture property modification data comprising information indicative of one or more proposed modifications to be applied to the virtual reality content for subsequent viewing in virtual reality, the one or more modifications relating to one or more of an aural presentation of at least a part of the audio and a visual presentation of at least part of the visual imagery of the virtual reality content, the capture property modification data further comprising, for each of the one or more modifications, information indicative of a modification time comprising a time at which the proposed modification has effect in the virtual reality content, and a virtual location in the virtual reality space affected by the modification;
   provide for presentation of the virtual reality content in virtual reality to a reviewing user with the proposed modifications defined by the capture property modification data at least reversibly made to the virtual reality content and, to enable the one or more proposed modifications to be reviewed by the reviewing user, provide for presentation of one or more modification graphics indicative of the proposed modifications, the one or more modification graphics temporally presented based on the modification time and visually positioned in the virtual reality space in accordance with the virtual location.

In one or more embodiments, the apparatus is caused to provide, based on user input of the reviewing user, for one or more of:
i) approval of one or more of the proposed modifications;
ii) rejection of one or more of the proposed modification; and
iii) further modification of one or more of the proposed modification.

In one or more embodiments, the apparatus is caused to provide for presentation of the virtual reality content in virtual reality to the reviewing user with one or more of the proposed modifications absent based on an unmodified-viewing-selection input by the reviewing user.

In one or more embodiments, the apparatus is caused to provide for the sending of a review request message to the reviewing user based on a determination that the reviewing user is not reviewing the proposed modifications made to the virtual reality content.

In one or more embodiments, the or each modification graphic comprises a user interface element comprising one or more of;
i) a diagrammatic visual representation of at least one of the proposed modifications;
ii) a user interface element for receiving a virtual user input to provide for one or more of approval or rejection of each proposed modification;
iii) a user interface element for receiving virtual user input to provide for further modification of each proposed modification.

In one or more embodiments, prior to providing for presentation of the virtual reality content to the reviewing user, the apparatus is further configured to provide for creation of the capture property modification data based on user input by a modifying user, the modifying user provided with one or more of:
i) a live virtual reality view of the scene as the virtual reality content is captured;
ii) a virtual reality view of the scene following the virtual reality content being captured;
iii) a live augmented reality view of the scene, augmented with at least audio captured by one or more audio capture devices present in the scene configured for capturing the audio of the virtual reality content; and
iv) an augmented reality view of the scene following the virtual reality content being captured, augmented with at least audio captured by one or more audio capture devices present in the scene configured for capturing the audio of the virtual reality content.

In one or more embodiments, following the approval of one or more of the proposed modifications, provide for generation of modified virtual reality content based on the virtual reality content and the proposed modifications approved by the reviewing user, the modified virtual reality content comprising the virtual reality content with the approved modifications having been made thereto.

In one or more examples, the modified virtual reality content does not include original parts of the virtual reality content that are modified by the approved proposed modifications. In one or more examples, the modified virtual reality content comprises the virtual reality content with the further modifications by the reviewing user having been made thereto.

In one or more embodiments, the one or more proposed modifications include modification to the audio of the virtual reality content comprising one or more of volume; bass; treble; a spatial extent in the virtual reality space when the audio is spatial audio having associated therewith an origin direction comprising the direction from which the audio is perceived to originate when provided for audible presentation.

In one or more embodiments, the one or more proposed modifications include modification to the visual imagery of the virtual reality content comprising one or more of brightness in a localised area of the visual imagery; brightness of the whole spatial extent of the visual imagery; contrast in a localised area of the visual imagery; contrast of the whole spatial extent of the visual imagery; and computer-generated imagery in localised area or whole visual extent of video imagery.

In one or more embodiments, the modified virtual reality content is provided for one or more of live broadcast and live streaming.

In one or more embodiments, a virtual reality view is presented to the reviewing user that provides for viewing of the video imagery of the virtual reality content, the virtual reality view comprising a spatial portion of the video imagery being smaller in spatial extent than the spatial extent of the video imagery, and wherein based on at least one of the modification graphics being positioned outside the current virtual reality view of the reviewing user, provide for display of a direction-to-modification graphic indicative of at least the direction the reviewing user is required to move the virtual reality view to see the modification graphic in the virtual reality view.

In one or more embodiments, the direction-to-modification graphic comprises one or more of;
an arrow;
an marker at an edge of the current virtual reality view;
a map comprising a plan view of the virtual reality space showing the reviewing user, a current direction of the virtual reality view and the location of the modification graphic.

In one or more examples, the capture property modification data is generated based on user input provided while watching the VR content in augmented reality.

In a second aspect there is provided a method, the method comprising
based on virtual reality content comprising visual imagery and audio of a scene for presentation in virtual reality to provide a virtual reality space in which the visual imagery is to be displayed to represent the scene, and capture property modification data comprising information indicative of one or more proposed modifications to be applied to the virtual reality content for subsequent viewing in virtual reality, the one or more modifications relating to one or more of an aural presentation of at least a part of the audio and a visual presentation of at least part of the visual imagery of the virtual reality content, the capture property modification data further comprising, for each of the one or more modifications, information indicative of a modification time comprising a time at which the proposed modification has effect in the virtual reality content, and a virtual location in the virtual reality space affected by the modification;
providing for presentation of the virtual reality content in virtual reality to a reviewing user with the proposed modifications defined by the capture property modification data at least reversibly made to the virtual reality content and, to enable the one or more proposed modifications to be reviewed by the reviewing user, providing for presentation of one or more modification graphics indicative of the proposed modifications, the one or more modification graphics temporally presented based on the modification time and visually positioned in the virtual reality space in accordance with the virtual location.

In a third aspect there is provided a computer readable medium comprising computer program code stored thereon, the computer readable medium and computer program code being configured to, when run on at least one processor, perform the method of:
based on virtual reality content comprising visual imagery and audio of a scene for presentation in virtual reality to provide a virtual reality space in which the visual imagery is displayed to represent the scene, and capture property modification data comprising information indicative of one or more proposed modifications to be applied to the virtual reality content for subsequent viewing in virtual reality, the one or more modifications relating to one or more of an aural presentation of at least a part of the audio and a visual presentation of at least part of the visual imagery of the virtual reality content, the capture property modification data further comprising, for each of the one or more modifications, information indicative of a modification time comprising a time at which the proposed modification has effect in the virtual reality content, and a virtual location in the virtual reality space affected by the modification;
providing for presentation of the virtual reality content in virtual reality to a reviewing user with the proposed modifications defined by the capture property modification data at least reversibly made to the virtual reality content and, to enable the one or more proposed modifications to be reviewed by the reviewing user, providing for presentation of one or more modification graphics indicative of the proposed modifications, the one or more modification graphics temporally presented based on the modification time and visually positioned in the virtual reality space in accordance with the virtual location.

In a fourth aspect there is provided an apparatus comprising:
at least one processor; and
at least one memory including computer program code,
the at least one memory and the computer program code configured to, with the at least one processor, cause the apparatus to perform at least the following:
   in respect of virtual reality content comprising visual imagery and audio of a scene for presentation in virtual reality to provide a virtual reality space in which the visual imagery is displayed to represent the scene;
   based on user input from a modifying user, the user input indicative of one or more modifications relating to one or more of an aural presentation of at least a part of the audio and a visual presentation of at least part of the visual imagery of the virtual reality content,
   provide for generation of capture property modification data comprising information indicative of one or more proposed modifications to be at least reversibly applied to the virtual reality content for subsequent viewing in virtual reality, the capture property modification data further comprising, for each of the one or more modifications, information indicative of a modification time, relative to the virtual reality content, at which the proposed modification has effect and a virtual location in the virtual reality space affected by the modification, the virtual reality content and capture property modification data for subsequent review by a reviewing user.

In a fifth aspect there is provided a method, the method comprising:
in respect of virtual reality content comprising visual imagery and audio of a scene for presentation in virtual reality to provide a virtual reality space in which the visual imagery is displayed to represent the scene;
based on user input from a modifying user, the user input indicative of one or more modifications relating to one or more of an aural presentation of at least a part of the audio and a visual presentation of at least part of the visual imagery of the virtual reality content,
providing for generation of capture property modification data comprising information indicative of one or more proposed modifications to be at least reversibly applied to the virtual reality content for subsequent viewing in virtual reality, the capture property modification data further comprising, for each of the one or more modifications, information indicative of a modification time, relative to the virtual reality content, at which the proposed modification has effect and a virtual location in the virtual reality space affected by the modification, the virtual reality content and capture property modification data for subsequent review by a reviewing user.

In a sixth aspect there is provided a computer readable medium comprising computer program code stored thereon, the computer readable medium and computer program code being configured to, when run on at least one processor, perform the method of:
in respect of virtual reality content comprising visual imagery and audio of a scene for presentation in virtual reality to provide a virtual reality space in which the visual imagery is displayed to represent the scene;
based on user input from a modifying user, the user input indicative of one or more modifications relating to one or more of an aural presentation of at least a part of the audio and a visual presentation of at least part of the visual imagery of the virtual reality content,
providing for generation of capture property modification data comprising information indicative of one or more proposed modifications to be at least reversibly applied to the virtual reality content for subsequent viewing in virtual reality, the capture property modification data further comprising, for each of the one or more modifications, information indicative of a modification time, relative to the virtual reality content, at which the proposed modification has effect and a virtual location in the virtual reality space affected by the modification, the virtual reality content and capture property modification data for subsequent review by a reviewing user.

In a further aspect we provide a VR content production system configured to provide for:
the generation of capture property modification data based on input received from a modifying user presented with at least part of captured VR content in AR in accordance with the sixth aspect; and
the presentation of the captured VR content, in VR, with proposed modifications of the capture property modification data at least reversibly applied thereto to a reviewing user in accordance with the second aspect.

In a further aspect there is provided an apparatus, the apparatus comprising means configured to;
based on virtual reality content comprising visual imagery and audio of a scene for presentation in virtual reality to provide a virtual reality space in which the visual imagery is displayed to represent the scene, and capture property modification data comprising information indicative of one or more proposed modifications to be applied to the virtual reality content for subsequent viewing in virtual reality, the one or more modifications relating to one or more of an aural presentation of at least a part of the audio and a visual presentation of at least part of the visual imagery of the virtual reality content, the capture property modification data further comprising, for each of the one or more modifications, information indicative of a modification time comprising a time at which the proposed modification has effect in the virtual reality content, and a virtual location in the virtual reality space affected by the modification;
provide for presentation of the virtual reality content in virtual reality to a reviewing user with the proposed modifications defined by the capture property modification data at least reversibly made to the virtual reality content and, to enable the one or more proposed modifications to be reviewed by the reviewing user, provide for presentation of one or more modification graphics indicative of the proposed modifications, the one or more modification graphics temporally presented based on the modification time and visually positioned in the virtual reality space in accordance with the virtual location.

In a further aspect there is provided an apparatus, the apparatus comprising means configured to;
in respect of virtual reality content comprising visual imagery and audio of a scene for presentation in virtual reality to provide a virtual reality space in which the visual imagery is displayed to represent the scene;
based on user input from a modifying user, the user input indicative of one or more modifications relating to one or more of an aural presentation of at least a part of the audio and a visual presentation of at least part of the visual imagery of the virtual reality content,
provide for generation of capture property modification data comprising information indicative of one or more proposed modifications to be at least reversibly applied to the virtual reality content for subsequent viewing in virtual reality, the capture property modification data further comprising, for each of the one or more modifications, information indicative of a modification time, relative to the virtual reality content, at which the proposed modification has effect and a virtual location in the virtual reality space affected by the modification, the virtual reality content and capture property modification data for subsequent review by a reviewing user.

The present disclosure includes one or more corresponding aspects, examples or features in isolation or in various combinations whether or not specifically stated (including claimed) in that combination or in isolation. Corresponding means and corresponding functional units (e.g., function enabler, AR/VR graphic renderer, display device) for performing one or more of the discussed functions are also within the present disclosure.

Corresponding computer programs for implementing one or more of the methods disclosed are also within the present disclosure and encompassed by one or more of the described examples.

The above summary is intended to be merely exemplary and non-limiting.

### Brief Description of the Figures

A description is now given, by way of example only, with reference to the accompanying drawings, in which:
figure 1 illustrates an example apparatus for providing for display of modification graphics as well as an example apparatus for creation of capture property modification data;
figure 2 shows a real world scene and a modifying user;
figure 3 shows a reviewing user presented with a virtual reality view of the virtual reality content of the scene shown in figure 2;
figure 4 shows an example virtual reality view provided to the reviewing user as well an example modification graphic;
figure 5 shows an example virtual reality view provided to the reviewing user in which a modification made at a current elapsed time does not happen to be visible in the current virtual reality view;
figure 6 shows a process flow diagram and an example alert to a reviewing user who is not reviewing the virtual reality content with the modifications applied thereto;
figure 7 shows a real world scene and a modifying user alongside a process flow diagram to illustrate the creation of capture property modification data;
figure 8 shows an example augmented reality view provided to the modifying user;
figure 9 shows an overview of example operations of the system;
figure 10 shows a flowchart illustrating an example method;
figure 11 shows a flowchart illustrating an example method; and
figure 12 shows a computer readable medium.

### Description of Example Aspects

Virtual reality (VR) may use a VR display comprising a headset, such as glasses or goggles or virtual retinal display, or one or more display screens that surround a user to provide the user with an immersive virtual experience. A virtual reality apparatus, which may or may not include the VR display, may provide for presentation of multimedia VR content representative of a virtual reality scene to a user to simulate the user being present within the virtual reality scene. Accordingly, in one or more examples, the VR apparatus may provide signalling to a VR display for display of the VR content to a user while in one or more other examples, the VR apparatus may be part of the VR display, e.g. part of the headset. The virtual reality scene may therefore comprise the VR content displayed within a three-dimensional virtual reality space so that the user feels immersed in the scene, as if they were there, and may look around the VR space at the VR content displayed around them. The virtual reality scene may replicate a real world scene to simulate the user being physically present at a real world location or the virtual reality scene may be computer generated or a combination of computer generated and real world multimedia content. Thus, the VR content may be considered to comprise the imagery (e.g. static or video imagery), audio and/or accompanying data from which a virtual reality scene may be generated for display. The VR apparatus may therefore provide the VR scene by generating the virtual, three-dimensional, VR space in which to display the VR content. The virtual reality scene may be provided by a panoramic video (such as a panoramic live broadcast), comprising a video having a wide or 360° field of view (or more, such as above and/or below a horizontally oriented field of view). A panoramic video may have a wide field of view in that it has a spatial extent greater than a field of view of a user or greater than a field of view with which the panoramic video is intended to be displayed.

The VR content provided to the user may comprise live or recorded images of the real world, captured by a VR content capture device, for example. An example VR content capture device comprises a Nokia Technologies OZO device. As the VR scene is typically larger than a portion a user can view with the VR display, the VR apparatus may provide, for display on the VR display, a virtual reality view of the VR scene to a user, the VR view showing only a spatial portion of the VR content that is viewable at any one time. The VR apparatus may provide for panning around of the VR view in the VR scene based on movement of a user's head and/or eyes. A VR content capture device may be configured to capture VR content for display to one or more users. A VR content capture device may comprise one or more cameras and, optionally, one or more (e.g. directional) microphones configured to capture the surrounding visual and aural scene from a capture point of view. Thus, a musical performance may be captured (and recorded) using a VR content capture device, which may be placed on stage, with the performers moving around it or from the point of view of an audience member. In each case a consumer of the VR content may be able to look around using the VR display of the VR apparatus to experience the performance at the capture location as if they were present.

Augmented reality (AR) may use an AR display, such as glasses or goggles or a virtual retinal display, to augment a view of the real world (such as seen through the glasses or goggles) with computer generated content. An augmented reality apparatus, which may or may not include an AR display, may provide for presentation of multimedia AR content configured to be overlaid over the user's view of the real-world. Thus, a user of augmented reality may be able to view the real world environment around them, which is augmented or supplemented with content provided by the augmented reality apparatus, which may be overlaid on their view of the real world and/or aurally overlaid over an aural real world scene they can hear. The content may comprise multimedia content such as pictures, photographs, video, diagrams, textual information, aural content among others. Thus, while augmented reality may provide for direct viewing of the real world with the addition of computer generated graphics and/or audio content, a user of virtual reality may only be able to see content presented on the VR display of the virtual reality apparatus substantially without direct viewing of the real world.

In addition to the audio received from the microphone(s) of the VR content capture device further microphones each associated with a distinct audio source may be provided. In one or more examples, the VR content capture device may not have microphones and the aural scene may be captured by microphones remote from the VR content capture device. Thus, microphones may be provided at one or more locations within the real world scene captured by the VR content capture device, each configured to capture audio from a distinct audio source. For example, using the musical performance example, a musical performer or a presenter may have a personal microphone. Knowledge of the location of each distinct audio source may be obtained by using transmitters/receivers or identification tags to track the position of the audio sources, such as relative to the VR content capture device, in the scene captured by the VR content capture device. Thus, the VR content may comprise the visual imagery captured by one or more VR content capture devices and the audio captured by the one or more VR content capture devices and, optionally/alternatively, one or more further microphones. The location of the further microphones may be provided for providing spatial audio.

Thus, the virtual reality content may be provided with spatial audio having directional properties, such that the audio is perceived to originate from a point in the VR space, which may be linked to the imagery of the VR content. The spatial positioning of the spatial audio may be provided by the degree to which audio is presented to each channel of a multichannel audio arrangement, as well as by 3D audio effects, such as those that utilise a head related transfer function to create a spatial audio space in which audio can be positioned for presentation to a user. Spatial audio may be presented by headphones by using head-related-transfer-function (HRTF) filtering techniques or, for loudspeakers, by using vector-base-amplitude panning techniques to position the perceived aural origin of the audio content.

The production of VR content may require the expertise of several members of a production team or, more generally, one or more users may wish to review proposed modifications to the VR content. For example, a sound engineer may have responsibility for adjustment of levels of audio from one or more microphones in the captured VR content. The sound engineer may make those adjustments "live" as the VR content is being captured or in a post-production phase. The modifications made to the audio of the VR content by the sound engineer may need to be approved or checked by another member of the production team such as by a director, or by the sound engineer at a later time to double check the adjustments are acceptable or optimum in their opinion. Similarly, a VR content capture device operator or special effects coordinator may make adjustments to visual aspects of the captured VR content and their adjustments may need to be approved or checked by another member of the production team or by them at a later time. On approval of the modifications by one or more users, VR content may be generated where the modifications are made permanent, such that one or more portions of the original content is replaced by its modified version. In the description that follows, the term "modifying user" will be used to describe the person (or automated electronic device if the modifications are automated) that makes proposed modifications to the VR content. The term "reviewing user" will be used to describe the person who reviews (and possibly approves or rejects) the proposed modifications made by the modifying user.

In one or more examples, the modifying user may use an AR apparatus to make the proposed modifications to the VR content as it is being captured. The VR content may then be streamed to one or more users to watch. The making of the modifications in AR may be advantageous as the modifying user may be able to see/hear at least the approximate effect of their modifications. For example, the modifications may be rendered at a lower quality or may be applied to only a spatial portion of the content that is captured to reduce latency. The processing of the production VR content from the VR content being captured may take time, particularly if the proposed modifications are to be incorporated therein. Accordingly, in VR content capture, there may be considered to be an AR stream and a VR stream based on the content captured. The AR stream may be used by a modifying user to see/hear the effect of their modifications with less of a (e.g. processing) delay compared to the VR stream. The VR stream may, however, incorporate the modifications more accurately or at a better quality than the AR stream. The content viewed by the modifying user in the AR stream may be less delayed (compared to the time of making the modifications) than in the VR stream. The VR stream with the modifications (that were enacted in the AR mode by the modifying user) may be audible/visible with a delay of multiple seconds. Thus, in some examples, because of the long delay to obtain the VR stream it is not easy for the modifying user or reviewing user to keep track of the modifications made earlier based on the AR stream, when watching the VR stream at a later time. In one or more examples, it may be difficult to provide for efficient reviewing of modifications by one or more reviewing users.

Accordingly, proposed modifications may comprise modifications relating to one or more of aural presentation of at least a part of the audio of the VR content and visual presentation of at least part of the visual imagery of the VR content. The proposed modifications may comprise instructions that describe how the VR content should be modified that can then be reversibly applied so that the reviewing user can appreciate the effect of the proposed modification applied and not applied. In one or more examples, the proposed modifications may comprise a modified version of at least part of the audio and/or a modified version of at least part of the visual imagery that is provided along with the original VR content so that the reviewing user can appreciate the effect of the proposed modification, such as by switching between the modified version of the VR content and the original VR content.

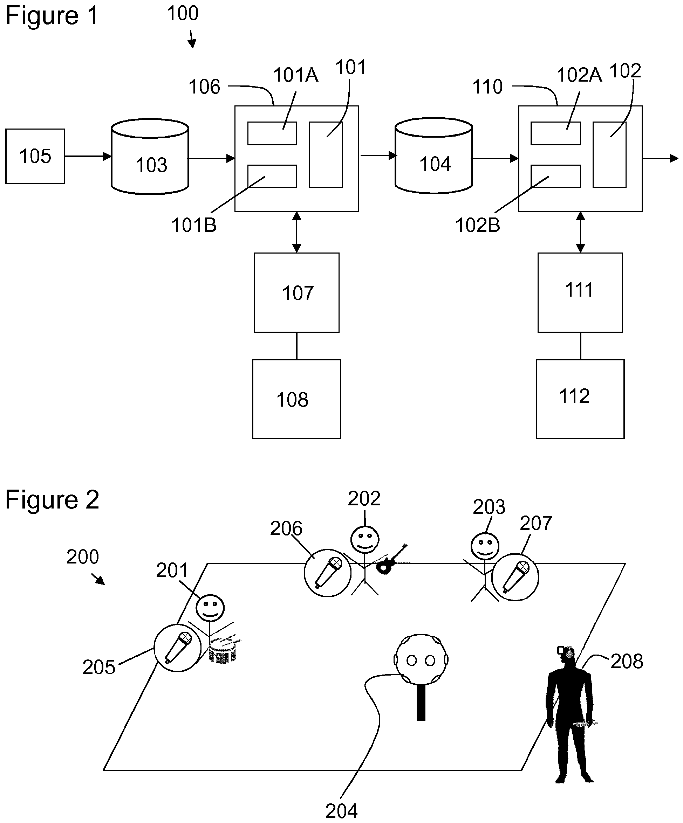

An apparatus may be provided that provides for receipt of proposed modifications from a modifying user and for subsequent approval/rejection from a reviewing user. In one or more examples, two different apparatus may be provided or different modules of the same apparatus may be provided for these functions. In figure 1, a system 100 is shown illustrating a modifying apparatus 101 for making proposed modifications and a separate, reviewing apparatus 102 for reviewing the proposed modifications. While the system 100 is shown connected together in figure 1, it will be appreciated that this is for understanding and the modifying apparatus 101 and the reviewing apparatus 102 may be separate, with the VR content accessible by each of them and the proposed modifications passed directly or indirectly from the apparatus 101 to the apparatus 102.

The apparatus 101 and/or the apparatus 102 mentioned above may comprise or be connected to a processor 101A, 102A and a memory 101B and 102B configured to execute computer program code. The apparatus 101 and/or the apparatus 102 may have only one processor 101A, 102A and one memory 101B, 102B but it will be appreciated that other embodiments may utilise more than one processor and/or more than one memory (e.g. same or different processor/memory types). Further, the apparatus 101, 102 may be an Application Specific Integrated Circuit (ASIC). It will be appreciated that the apparatus 101 and 102 are, in terms of their hardware configuration, independent of one another.

The processor may be a general purpose processor dedicated to executing/processing information received from other components, such as from a content store 103, 104 and the respective apparatuses 101, 102, in accordance with instructions stored in the form of computer program code in the memory. The output signalling generated by such operations of the processor is provided onwards to further components, such as to the apparatus 102 from the apparatus 101 or from the apparatus 102 for storage, streaming or broadcast of modified VR content.

The memory 101B, 102B (not necessarily a single memory unit) is a computer readable medium (solid state memory in this example, but may be other types of memory such as a hard drive, ROM, RAM, Flash or the like) that stores computer program code. This computer program code stores instructions that are executable by the processor, when the program code is run on the processor. The internal connections between the memory and the processor can be understood to, in one or more example embodiments, provide an active coupling between the processor and the memory to allow the processor to access the computer program code stored on the memory.

In this example the respective processors and memories are electrically connected to one another internally to allow for electrical communication between the respective components. In this example the components are all located proximate to one another so as to be formed together as an ASIC, in other words, so as to be integrated together as a single chip/circuit that can be installed into an electronic device. In some examples one or more or all of the components may be located separately from one another.

Figure 1 shows a VR content capture device 105 that may be associated with one or more microphones to capture visual imagery and audio from a real world scene 200 (shown in figure 2). The VR content from the VR content capture device 105 is provided to the content store 103, which may store the VR content for post-capture processing. In one or more examples the content store 103 may represent the transient storage of VR content, such as at a buffer, before it is passed to the apparatus 101.

The apparatus 101, in this example, forms part of an augmented reality apparatus 106 for presenting at least part of the visual imagery and/or at least part of the audio of the VR content captured by the VR content capture device 105 in augmented reality. In one or more other examples, the apparatus 101 may form part of a VR apparatus. In one or more examples, the apparatus 100 may be independent of an AR or VR apparatus and may be in communication with a display apparatus (such as an AR or VR apparatus) for presenting at least part of the VR content to the modifying user. In this example, the processor 101A and memory 101B is shared by the AR apparatus 106 and the apparatus 101, but in other examples, they may have their own processors and/or memory.

The "modifying" apparatus 101 and AR apparatus 106 may provide for display of one or more augmented graphics over the modifying user's view of the scene 200 using AR headset 107 and provide for aural presentation of audio using headphones 108.

The operation of the apparatus 101 will be described in more detail below. However, in summary, the modifying user may make one or more proposed modifications to the VR content and the apparatus 101 may provide for generation of capture property modification data comprising information indicative of the one or more proposed modifications to be applied to the virtual reality content for subsequent viewing in virtual reality. The capture property modification data may be output by the apparatus 101 to the store 104. The capture property modification data may form part of the VR content, such as in the form of metadata or additional visual and audio streams, or may be separate from but associated with the VR content. The apparatus 101 may provide the VR content to the store 104 or the VR content may be obtained by the apparatus 102 from a different source.

Turning now to the "reviewing" apparatus 102, which may be used by the reviewing user to review the proposed modifications. The apparatus 102, in this example, forms part of a virtual reality apparatus 110 for presenting the visual imagery and audio of the VR content captured by the VR content capture device 105 in virtual reality with and without the proposed modifications having been applied to the VR content. In one or more examples, the apparatus 100 may be independent of the VR apparatus and may be in communication with a display apparatus (such as a VR apparatus with VR display) for presenting at least part of the VR content to the reviewing user. In this example, the processor 102A and memory 102B is shared by the VR apparatus 110 and the apparatus 102, but in other examples, they may have their own processors and/or memory.

The "reviewing" apparatus 102 and VR apparatus 110 may provide for display of one or more modification graphics representative of the proposed modifications displayed over the reviewing user's view of the VR content using a VR headset 111 and provide for aural presentation of audio (such as with the proposed modifications) using headphones 112.

Figure 2 shows a real world scene 200 that is for capture in virtual reality. The scene 200, in this example, includes a first musician 201 comprising a drummer, a second musician 202 comprising a guitarist, and third musician 203 comprising a singer. The musicians 201-203 each have a personal microphone 205-207 and can therefore be considered to be distinct audio sources. In this example, the audio sources are spaced apart within the scene 200. The scene is visually and aurally captured by a VR content capture device 204. Thus, the VR content capture device 204 captures visual imagery from a plurality of cameras that each point in different directions to capture the 360° scene 200. The audio from the scene may comprise the audio captured by the VR content capture device 204 as well as the audio captured by the microphones of the musicians 201-203. Each musician 201-203 is provided with a personal microphone 205, 206, 207 respectively. The location of the microphones 205-207 may be obtained from a location tracking system, such as an indoor positioning system that uses wireless communication to identify the locations of tags associated with the microphone. The location of the source of the audio can then be determined. In one or more examples, the musicians 201-203 themselves are tracked (e.g. using facial recognition or other visual technique) such that with knowledge of which microphone 205-207 is associated with which musician 201-203 the location of the source of the audio obtained by each microphone can be determined. Such location tracking systems will be known to those skilled in the art along with other methods of tracking the position of the microphones and/or musicians. The VR content comprises said visual imagery and said audio.

A modifying user 208 is shown in Figure 2 and what is provided to them will be described in more detail below. First, we will consider the operation of the "reviewing" apparatus 102.

The VR content is for presentation in virtual reality. A user consuming VR content may be provided with a virtual reality three dimensional space to replicate the real world space and in which the visual imagery is displayed to surround a virtual point of view of the user. Accordingly, as the user looks around the VR space they may be presented with visual imagery from a corresponding real world direction as captured by the VR content capture device.

In consideration of the reviewing apparatus 102, the VR content may be obtained from the store 104. Further, the apparatus 102 may be provided with capture property modification data comprising information indicative of one or more proposed modifications to be applied to the virtual reality content for subsequent viewing in virtual reality. Thus, in one or more examples, the proposed modifications to the VR content made by the modifying apparatus 101 (such as under instruction of the modifying user 208) are defined in the capture property modification data and provided to the apparatus 102 from the store 104, for example.

The one or more proposed modifications relate to one or more of an aural presentation of at least a part of the audio and a visual presentation of at least part of the visual imagery of the virtual reality content. The examples described herein are focussed mainly on the modification of the audio of the VR content but it will be appreciated that proposed modifications to the visual imagery are also within the scope of this disclosure.

The proposed modifications may comprise the modification of the gain of one of the musician's microphones, such as to make their singing of a chorus of their song clearer. The proposed modification may comprise increasing the bass of the audio from the drummer 201 for their drum solo. The proposed modifications therefore may be temporally defined relative to an elapsed running time through the VR content. Thus, if the drum solo begins at 2 minutes into the VR content and ends at 2 minutes 20 seconds, the proposed modification may be temporally defined as extending between those elapsed time points. The proposed modifications may also affect only a defined spatial part of the VR content. For example, if spatial audio is provided in which the audio is presented such that a perceived origin of the audio is in a particular direction in the VR space, the proposed modification to the drummer's audio may be considered to be focussed on the visual position of the drummer 201 in the VR content. If the proposed modification is to visual properties of the VR content, the modification may only affect a spatial region relative to the whole visual spatial extent of the VR content. Thus, the capture property modification data further comprises, for each of the one or more modifications, information indicative of a modification time, relative to the virtual reality content, at which the proposed modification has effect and a virtual location in the virtual reality space affected by the modification. The modification time may be defined by an elapsed time through the VR content and/or by way of timestamps marked in the VR content and referenced in the proposed modification. The virtual location in the virtual reality space may be defined by an azimuth, elevation and optionally distance from an origin location or in any other coordinate system. The virtual location may define a point or an area of the VR content.

The reviewing apparatus 102 is configured to provide for presentation of the virtual reality content in virtual reality to a reviewing user with the proposed modifications made to the virtual reality content. Thus, based on the VR apparatus 110 providing for the presentation of the VR content or signalling from the apparatus 102 causing the display of the VR content, the apparatus 102 may provide signalling to cause the proposed modifications to be applied to the VR content. In one or more examples, the proposed modifications may be considered as modification instructions and the apparatus 102 may provide for creation of a preview of the VR content with the modifications made in accordance with the modification instructions. Thus, the original VR content, without modification, may be available for viewing as well as the original VR content with the modifications made thereto. In one or more examples, the proposed modifications may comprise portions of audio with modifications applied or portions of video imagery with the modifications applied. Accordingly, the apparatus 102 may provide for switching between presentation of original and modified visual imagery and/or audio. Accordingly, the apparatus 102 may provide for processing of the VR content to apply the proposed modifications and provide for display of the modified VR content and/or the apparatus may provide for switching between pre-processed portions of visual imagery and/or audio and the original VR content to show the VR content in modified and un-modified forms, such as on the request of the user.

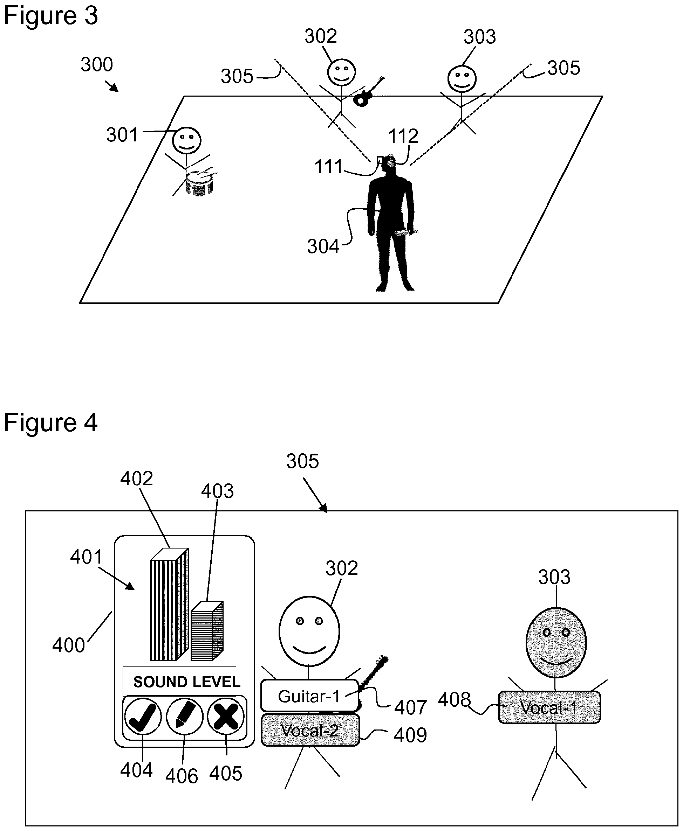

Figure 3 shows a virtual reality space 300 virtually representing the real word space 200. The visual imagery of the VR content is displayed such that the reviewing user can see imagery of the first, second and third musicians labelled 301, 302, 303 respectively. A depiction of the reviewing user 304 in the VR space 300 is shown wearing the VR headset 111 and headphones 112. The spatial extent of the VR content is greater than a field of view provided to the reviewing user 304 and thus, as described above, the reviewing user is provided with a virtual reality view shown as lines 305 illustrative of the extent of the field of view of the VR view. Thus, the user 304 is currently viewing the imagery of the second and third musicians 302, 303. It will be appreciated that the user, on turning their head to the left to change the direction of the VR view, may then be able to see the imagery of the first musician 301.

Figure 4 shows the VR view 305 provided to the reviewing user 304. As shown in the perspective view of the VR space 300 of Figure 3, the reviewing user is provided with a VR view of the imagery of the second and third musicians 302, 303.

The apparatus 102 is configured to provide for display of one or more modification graphics 400 indicative of the proposed modifications. The modification graphic 400, in this example, relates to a change to the audio of the second musician during a predetermined time comprising, for example, a guitar solo. The modification graphic 400 is presented based on the modification time such that the modification graphic is presented at least during the time defined by the modification time. In one or more examples, the modification time comprises an elapsed time through the virtual reality content such that the reviewing user will see/hear the proposed modification at an equivalent time during the virtual reality content to when the modification was intended to be applied. The modification time may include a start time, an end time and/or a duration of when the modification is applied.

It will be appreciated that the modification graphic 400 may be displayed only when the current time relative to the VR content falls within the time period defined by the modification time. In other examples, the modification graphic may only be "active" and thereby accepting of user input during the modification time but optionally displayed in an "inactive state" and thereby not accepting of user input at other times. The modifying graphic 400 may be displayed in advance of the modification time (such as by an amount of time defined by a predetermined advance time period). This may give the reviewing user time to virtually look towards and therefore find the upcoming modification in the spatial extent of the VR content.

In one or more examples the proposed modification relates to a position in the visual imagery because the modification may be a visual modification to a localised point or area of the visual imagery. In one or more examples, the modification may be an audio modification and imagery of a source of the audio (e.g. 302) modified by the audio modification may be at a point or area in the visual imagery. Thus, each modification may be associated with a virtual location indicative of the above-mentioned localised point or area. If the proposed modification is applied to the whole spatial extent of the virtual reality imagery (e.g. a global change in brightness or a change to ambient audio) the virtual location may be specified as such or may specify a predetermined location, such as the location of the point of view of the virtual reality content capture device. The modification graphic is positioned in the virtual reality space 300 and therefore in the virtual reality view 305 in accordance with the virtual location. As mentioned, the proposed modification, in this example relates to the audio of the second musician, and therefore the virtual location may define the location of the microphone of the second musician. The apparatus may provide for display of the modification graphic 400 centred on the virtual location, offset therefrom, having an arrow or pointer pointing to the virtual location, or in any other way to visually associate the modification graphic 400 with the virtual location.

The modification graphic 400 may thus be indicative of the occurrence of a proposed modification so that a reviewing user can effectively consider the effect of the modification. In one or more examples, the modification graphic includes a diagrammatic visual representation of a modification made to the audio of the VR content. In the example of Figure 4, a bar graph 401 is depicted showing "sound level" or volume for the audio from the microphone of the second musician. The first bar 402 may be indicative of the sound level prior to the proposed modification and the second bar 403 may be indicative of the sound level post the proposed modification. It can be seen that, in this example, the capture property modification data indicates that the modifying user decreased the sound level to about half its original level. It will be appreciated that other methods of visually depicting the modifications may be provided, such as absolute or relative numerals, animations showing the changes, line graphs, icons or the like.

In one or more examples, user input applied to the modification graphic 400 or other graphic associated with the same modification may provide for presentation of the virtual reality content in virtual reality to the reviewing user 304 with the proposed modification absent. Accordingly, the reviewing user 304, based on providing an unmodified-viewing-selection input and/or a modified-viewing-selection input, may be able to switch between viewing the VR content in its modified and un-modified forms so that the effect of the proposed modification (and optionally other proposed modifications) can be appreciated. In this example, the apparatus 102 may provide for receipt of user input to the bar 402 to provide the unmodified-viewing-selection input and for receipt of user input to the bar 403 to provide the modified-viewing-selection input. The apparatus 102 may provide for receipt of user input via a pointer, a free space user gesture (e.g. tracked by sensors) or other man-machine interface.

In one or more examples, the apparatus 102 provides for receipt of user input such that the reviewing user may approve or reject the proposed modifications. In one or more examples, the apparatus 102 may provide for receipt of user input to provide for adjustment of the proposed modification to the VR content.

In this example, the modification graphic 400 is provided with a first user input element 404 which, on actuation, provides for approval of the proposed modification with which it is associated. The modification graphic 400 is provided with a second user input element 405 which, on actuation, provides for rejection of the proposed modification with which it is associated. The modification graphic 400 is provided with a third user input element 406 which, on actuation, provides for further modification of the proposed modification with which it is associated. Accordingly, a user interface providing for receipt of user input to effect an adjustment of the proposed modification may be provided.

The approval, rejection, and/or further modification of the one or more proposed modifications may cause the apparatus 102 to provide for generation of further capture property modification data with one or more of the approved proposed modifications present, the rejected proposed modifications marked as such or removed from the data and the further modifications recorded as such or the proposed modification replaced with the further modified version thereof. The further capture property modification data may be provided to a further reviewer or other person for further reviewing of the proposed modifications. In one or more examples, the apparatus 102 may provide for generation of modified virtual reality content based on the virtual reality content and the proposed modifications approved by the reviewing user but not the proposed modifications rejected by the reviewing user, the modified virtual reality content comprising the virtual reality content with the approved modifications having been made thereto.

In one or more examples, the modified virtual reality content does not include original parts of the virtual reality content that are modified by the approved proposed modifications. In one or more examples, the modified virtual reality content comprises the virtual reality content with the further modifications having been made (e.g. permanently) thereto by the reviewing user.

The modified virtual reality content may be provided for one or more of live broadcast and live streaming. Thus, for VR content that is intended to be live content, the modifying user and the reviewing user may be acting on live content that is broadcast or streamed slightly delayed from its capture time to allow for the modifications to be made and subsequently approved or rejected (as well as, for example, any computer processing time required to encode, transcode apply changes to the visual imagery/audio and the like).

In the above example, the proposed modification comprises a change to an audio level of the audio from a particular microphone. However, the proposed modifications may comprise modifications to other aspects of the audio as well as modifications to the visual imagery. For example, the one or more proposed modifications may include modification to the audio of the virtual reality content comprising one or more of volume; bass; treble; an aural spatial extent in the virtual reality space of spatial audio, the aural spatial extent comprising the range of directions from which the audio is perceived to originate when provided for audible presentation. The proposed modifications may include modification to the visual imagery of the virtual reality content comprising one or more of brightness in a localised area of the visual imagery; brightness of the whole spatial extent of the visual imagery; contrast in a localised area of the visual imagery; contrast of the whole spatial extent of the visual imagery; and computer-generated imagery in localised area or whole visual extent of video imagery. Thus, CGI effects may be applied such as Chroma key effects and additional imagery, such as crowds or explosions and the like.

Figure 4 also shows the apparatus configured to provide for display of an identifier 407, 408, 409 for each distinct audio source positioned to visually associated it with the audio source in the video imagery. The identifier may help the reviewing user to understand which microphone the audio being modified is sourced from. Thus, the identifier 407 is labelled Guitar-1 and may therefore comprise a microphone positioned to capture the guitar of the second musician 302. The identifiers 408 and 409 relate to two microphones; one for the voice of the third musician 303 and one for the voice of the second musician 302.

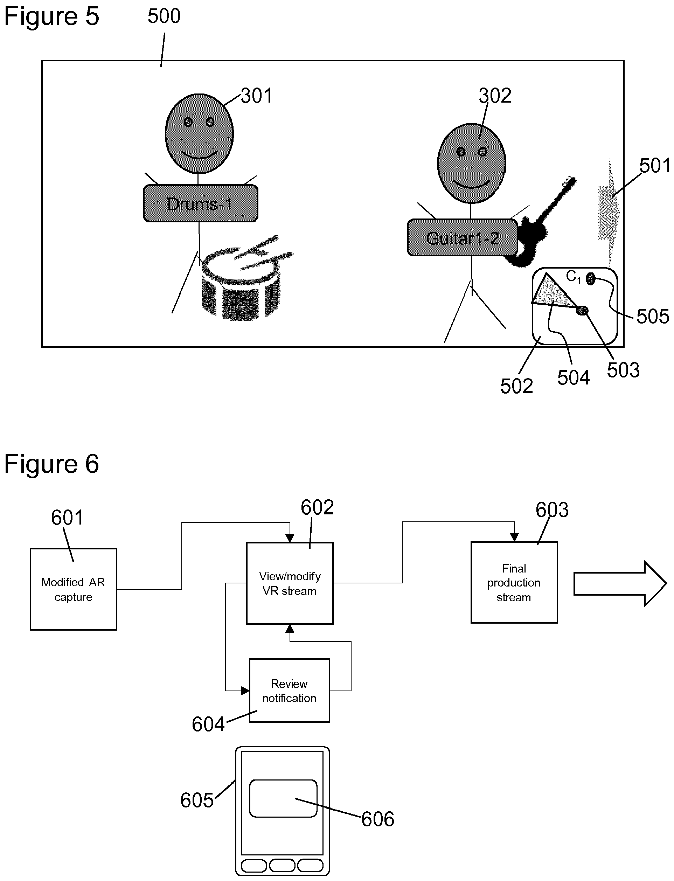

Figure 5 shows a virtual reality view 500 provided to the reviewing user 304. The virtual reality view 500 is directed towards the imagery of the first musician 301 and second musician 302. There may be times during the presentation of the VR content that the reviewing user is not looking in the appropriate direction in the VR space to see the proposed modification. For example, a modification to the audio of the third musician 303 may be applied at the current elapsed time through the VR content, and the third musician is not within the current VR view 500.

The apparatus 102 may provide for display of a direction-to-modification graphic 501, 502 indicative of at least the direction the reviewing user is required to move the virtual reality view 500 to see the modification graphic in the virtual reality view. In this example, a first and second direction-to-modification graphics 501, 502 are provided, although different graphics and different numbers of graphics may be provided in other examples. The first direction-to-modification graphic 501 comprises an arrow positioned at an edge of the VR view 500. The edge (and optionally the position along the edge) may be selected based on which direction the VR view should be moved to provide the shortest movement to the virtual location of the temporally current proposed modification. Accordingly, the arrow indicates that the reviewing user should look to the right to view the current proposed modification, which in this example, relates to the third musician. It will be appreciated that a marker or icon at the edge of the VR view may be provided rather than an arrow. Further, in one or more examples, the arrow may be positioned at other places in the view than at the edge. On moving the VR view 500 such that the third musician 303 is visible therein, the apparatus 102 may provide for display of the modification graphic 400 representative of the proposed modification made in relation to the third musician 303.

The second direction-to-modification graphic 502 comprises a map comprising a plan view of the virtual reality space showing the reviewing user 503, a current direction of the virtual reality view 504 and the location 505 of the virtual location of the temporally current proposed modification and therefore where the modification graphic will be displayed.

Figure 6 shows a process flow diagram illustrating the provision of an apparatus for the creation of the capture property modification data by the modifying user at 601, which may be generated in real-time as the VR content is captured. The provision of an apparatus for the review of the proposed modifications by the reviewing user is shown at process flow step 602, which may comprise reviewing the proposed modifications in VR. The creation of a modified virtual reality content based on the approved proposed modifications is shown at process flow step 603.

It may be that the reviewing user is not using the apparatus 102 to review the proposed modifications. This may be detected by one or more of failure to provide approval/rejection user input within a predetermined time, by the VR apparatus 110 reporting (or other device) that the headset 111 is not being worn or viewed, or by a user-set status of the reviewing user, such as being "away". In one or more examples, the apparatus 102 may be caused to provide for the sending of a review request message at step 604 to the reviewing user based on one or more of the above described determinations that the reviewing user is not using reviewing the proposed modifications. The apparatus 102 may provide for sending of the review request message to a registered electronic device of the reviewing user, such as their smart phone 605. Accordingly, the sending of the review request message may provide for the display of an alert 606 on the display of the registered electronic device 605 or the sounding of an alert. The reviewing user may then be prompted to review the proposed modifications and provide for their approval/rejection/further modification, as appropriate.

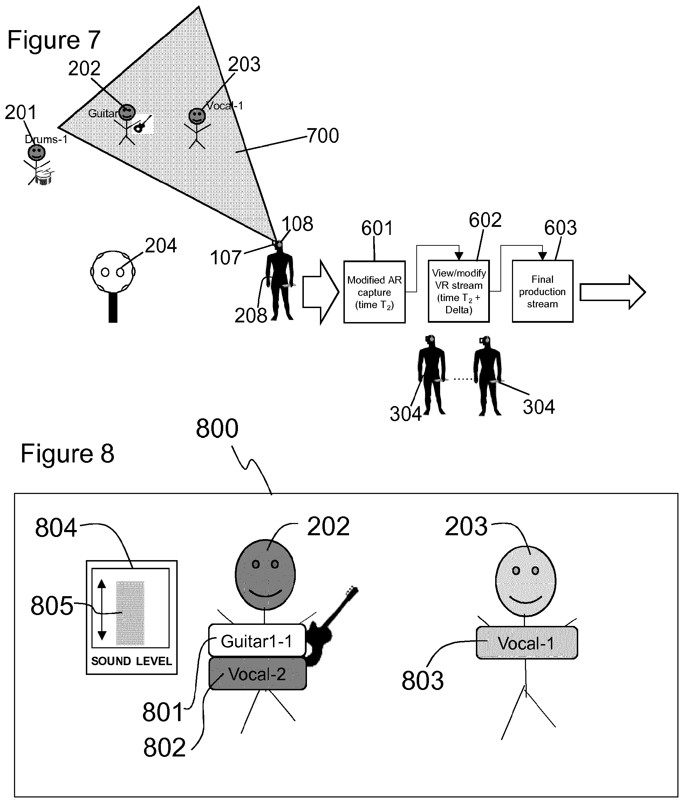

The making of proposed modifications and therefore the creation of capture property modification data will now be described with reference to figures 7 and 8.

Figure 7 shows the same process flow as shown in figure 6 as 601, 602 and 603 but without the review request message at step 604 for clarity.

In this example, the process flow illustrates the generation of a live stream of VR content. Accordingly, similar to figure 2, a real world space 200 is shown as well as the modifying user 208. In this example, the apparatus 101 is configured to provide the modifying user with an augmented reality experience as they view the real world scene 200 via augmented reality headset 107 and headphones 108. The field of view of the modifying user is shown in figure 7 as area 700, which includes the second and third musicians 202 and 203.

In this example the apparatus 102 is caused to provide the modifying user 208 with a user interface for making modifications overlaid over their view of the real world scene 200. However, the modifying user 208 may be provided with any one of:
i) a live virtual reality view of the scene 200 as the virtual reality content is captured;
ii) a virtual reality view of the scene 200 following the virtual reality content being captured;
iii) a live augmented reality view of the scene 200, augmented with at least audio captured by one or more audio capture devices present in the scene configured for capturing the audio of the virtual reality content; and
iv) an augmented reality view of the scene 200 following the virtual reality content being captured, augmented with at least audio captured by one or more audio capture devices present in the scene configured for capturing the audio of the virtual reality content.

Figure 8 illustrates the augmented reality view 800 of the scene 200 provided by the apparatus 101 corresponding to field of view 700. In the augmented reality view, the modifying user 208 can see the second and third musicians 202, 203. The apparatus 101 may provide for augmentation by way of providing the audio captured by the microphones 204-207 in the scene to the headphones 108 and, optionally, for display of augmented reality identifier graphics 801, 802 and 803 to show the audio sources and their positions in the scene 200. In figure 8, the modifying user 208 has provided for selection of the audio 801 from the guitar. Thus, based on user selection of one of the identifiers 801, the apparatus may provide for display of a user interface 804 in augmented reality for modifying the audio associated with the selected identifier graphic. The apparatus 101 may be configured to provide for creation of a proposed modification of the capture property modification data based on the user input provided to the user interface 804. Accordingly, the modifying user 208 may use a free space gesture detected by the AR apparatus 106 to adjust a slider 805 or any other user input, such as via a smart phone or other user input terminal, to create the proposed modification.

Accordingly, step 601 may further represent the creation of the virtual reality content with the proposed modifications made thereto for presentation to the one or more reviewing users (two shown in figure 7). Thus, the modifying user may make proposed modifications live while the VR content is captured. At time T, those modifications may have been made and at time T+ΔT the proposed modifications may be available to view by the reviewing user, where ΔT comprises the time required to create a stream of VR content with the proposed modification applied thereto. A further delay, T₂, may be introduced while the reviewing user reviews the proposed modifications and then the live stream will be created based on the accepted proposed changes at time T+ΔT+T₂+ΔT₂ where ΔT₂ comprises the time to generate the VR content with only the accepted proposed modifications (and further modified modifications if applicable) applied to the VR content. It will be appreciated that there will be inevitable delays in the creation of VR content based on the processing required to receive the video imagery from the VR content capture device in a format such as H.264/H.265, stitch multiple images together to create the spatial extent of the VR space, modify visual and/or audio of the VR content and encode it for viewing by the reviewing user as well as the creation of the modified VR content in an appropriate format, such as a streamable format (e.g. MPEG-DASH, HLS etc.).

In summary, the apparatus 101, in respect of virtual reality content comprising visual imagery and audio of a scene 200 for presentation in virtual reality to thereby provide a virtual reality space 300 representative of the scene 200; and based on user input from a modifying user 208, the user input indicative of one or more proposed modifications to the VR content, the apparatus 102 may provide for generation of capture property modification data. The proposed modifications may relate to one or more of an aural presentation of at least a part of the audio, such as audio from a particular microphone, and a visual presentation of at least part of the visual imagery of the virtual reality content. The capture property modification data comprises information indicative of one or more proposed modifications to be applied to the virtual reality content for subsequent viewing in virtual reality. The time the modifying user made the proposed modification or the time the modification should be applied to relative to the VR content is recorded as part of the capture property modification data. The location in the visual imagery affected by the proposed modification may also be recorded as part of the capture property modification data. As described above, the virtual reality content and the capture property modification data may be provided to a further apparatus 102 for subsequent review by a reviewing user.

Further, while a modifying user may be provided with AR content to see or hear the result of their proposed modifications as they are making them, such as in an AR environment, this may not be completely equivalent to how the proposed modification will appear/hear in a VR environment. Accordingly, the provision of reviewing of content as described herein may have a technical effect of providing for flexible making of the proposed modifications in AR while providing for more accurate appreciation of the effect of the proposed modifications in VR.

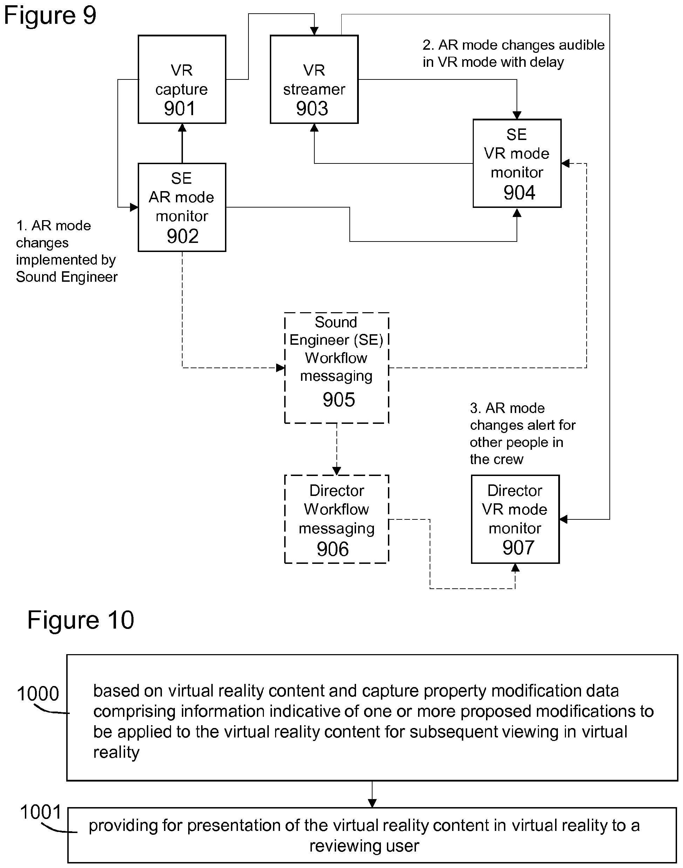

Figure 9 shows an overview of the operations performed by apparatus 101 and 102. The captured VR content is received by a VR capture module 901. The VR capture module 901 may receive the content from VR content capture device 105 and, optionally, microphones and/or omnidirectional video cameras. Based on the VR content, an AR mode monitor 902, which may be provided by apparatus 101, works with low latency to provide a near real-time overview of the captured VR scene to the modifying user. The modifying user performs the necessary modifications which are sent to the VR capture module 901 in the form of capture property modification data. A VR streamer 903, which may be provided by apparatus 102, takes the capture property modification data and the audio-visual content for generating the production VR content in a, for example, streamable format (MPEG-DASH, HLS or any suitable protocol). The VR streamer 903 sends a live feed consisting of the capture property modification data as in-band or out-of-band metadata to a VR stream player 904. The VR stream player 904 may show to the reviewing user the applied modifications and the affected areas in the VR scene, as described above. In this example, the proposed modifications are reviewed by the reviewing user, such as a director of the VR production. After the acceptance of / modification of / rejection of the proposed modifications, the final VR production stream can be delivered to end users. The creation of a proposed modification may be reported to a first reviewing user workflow messaging module 905 and, or subsequently, to a second reviewing user workflow messaging module 906. The first messaging module 905 may provide for prompting of the modifying user to review the modifications in the VR stream using the VR stream player 904. The second reviewing user workflow messaging module 906 may provide for prompting of the second reviewing user to review the modifications in the VR stream using the same or a different VR stream player 904, 907.

Figure 10 shows a flow diagram illustrating the steps of,
based on 1000 virtual reality content comprising visual imagery and audio of a scene for presentation in virtual reality to provide a virtual reality space in which the visual imagery is displayed to represent the scene, and capture property modification data comprising information indicative of one or more proposed modifications to be applied to the virtual reality content for subsequent viewing in virtual reality, the one or more modifications relating to one or more of an aural presentation of at least a part of the audio and a visual presentation of at least part of the visual imagery of the virtual reality content, the capture property modification data further comprising, for each of the one or more modifications, information indicative of a modification time comprising a time at which the proposed modification has effect in the virtual reality content and a virtual location in the virtual reality space affected by the modification;
providing 1001 for presentation of the virtual reality content in virtual reality to a reviewing user with the proposed modifications defined by the capture property modification data at least reversibly made to the virtual reality content and, to enable the one or more proposed modifications to be reviewed by the reviewing user, provide for presentation of one or more modification graphics indicative of the proposed modifications, the one or more modification graphics presented based on the modification time and positioned in the virtual reality space in accordance with the virtual location.

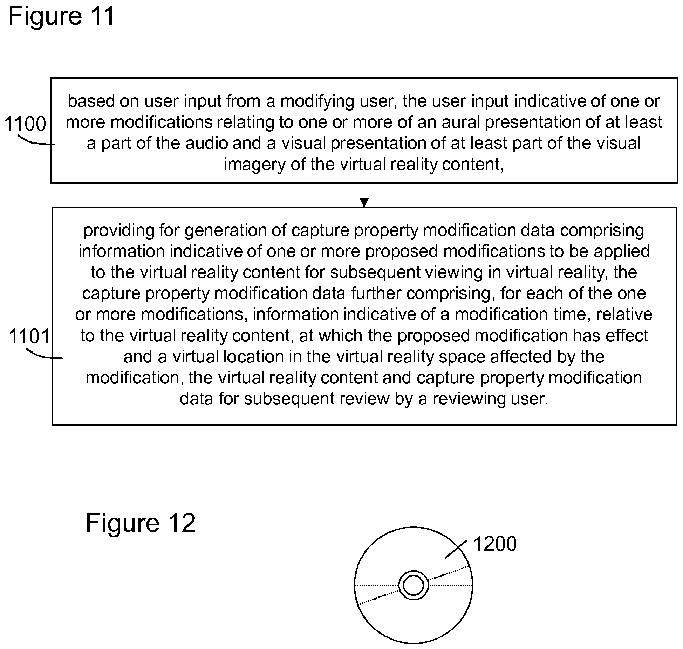

Figure 11 shows a flow diagram illustrating the steps of, in respect of virtual reality content comprising visual imagery and audio of a scene for presentation in virtual reality to provide a virtual reality space in which the visual imagery is displayed to represent the scene,
based on user input from a modifying user 1100, the user input indicative of one or more modifications relating to one or more of an aural presentation of at least a part of the audio and a visual presentation of at least part of the visual imagery of the virtual reality content,
providing 1101 for generation of capture property modification data comprising information indicative of one or more proposed modifications to be at least reversibly applied to the virtual reality content for subsequent viewing in virtual reality, the capture property modification data further comprising, for each of the one or more modifications, information indicative of a modification time, relative to the virtual reality content, at which the proposed modification has effect and a virtual location in the virtual reality space affected by the modification, the virtual reality content and capture property modification data for subsequent review by a reviewing user.

Figure 12 illustrates schematically a computer/processor readable medium 1200 providing a program according to an example. In this example, the computer/processor readable medium is a disc such as a digital versatile disc (DVD) or a compact disc (CD). In some examples, the computer readable medium may be any medium that has been programmed in such a way as to carry out an inventive function. The computer program code may be distributed between the multiple memories of the same type, or multiple memories of a different type, such as ROM, RAM, flash, hard disk, solid state, etc.

We also disclose a VR content production system configured to provide for:
the generation of capture property modification data based on input received from a modifying user presented with at least part of captured VR content in AR; and
the presentation of the VR content, in VR, with the proposed modifications of the capture property modification data applied thereto to a reviewing user.

The VR content production system may additionally provide for generation of modified VR content based on approved proposed modifications, approved by the reviewing user.

The VR content production system may comprise the apparatus 101 and the apparatus 102.

User inputs may be gestures which comprise one or more of a tap, a swipe, a slide, a press, a hold, a rotate gesture, a static hover gesture proximal to the user interface of the device, a moving hover gesture proximal to the device, bending at least part of the device, squeezing at least part of the device, a multi-finger gesture, tilting the device, or flipping a control device. Further the gestures may be any free space user gesture using the user's body, such as their arms, or a stylus or other element suitable for performing free space user gestures.

The apparatus shown in the above examples may be a portable electronic device, a laptop computer, a mobile phone, a Smartphone, a tablet computer, a personal digital assistant, a digital camera, a smartwatch, smart eyewear, a pen based computer, a non-portable electronic device, a desktop computer, a monitor, a smart TV, a server, a wearable apparatus, a virtual reality apparatus, or a module/circuitry for one or more of the same.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/orfirmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising:
at least one processor; and
at least one memory including computer program code,
the at least one memory and the computer program code configured to, with the at least one processor, cause the apparatus to perform at least the following:
based on virtual reality content comprising visual imagery and audio of a scene for presentation in virtual reality to provide a virtual reality space in which the visual imagery is displayed to represent the scene, and capture property modification data comprising information indicative of one or more proposed modifications to be applied to the virtual reality content for subsequent viewing in virtual reality, the one or more modifications relating to one or more of an aural presentation of at least a part of the audio and a visual presentation of at least part of the visual imagery of the virtual reality content, the capture property modification data further comprising, for each of the one or more modifications, information indicative of a modification time comprising a time at which the proposed modification has effect in the virtual reality content, and a virtual location in the virtual reality space affected by the modification;
provide for presentation of the virtual reality content in virtual reality to a reviewing user with the proposed modifications defined by the capture property modification data at least reversibly made to the virtual reality content and, to enable the one or more proposed modifications to be reviewed by the reviewing user, provide for presentation of one or more modification graphics indicative of the proposed modifications, the one or more modification graphics temporally presented based on the modification time and visually positioned in the virtual reality space in accordance with the virtual location.

2. The apparatus of claim 1, wherein the apparatus is caused to provide, based on user input of the reviewing user, for one or more of:
i) approval of one or more of the proposed modifications;
ii) rejection of one or more of the proposed modifications; and
iii) further modification of one or more of the proposed modifications.

3. The apparatus of claim 1 or claim 2, wherein the apparatus is caused to provide for presentation of the virtual reality content in virtual reality to the reviewing user with one or more of the proposed modifications absent based on an unmodified-viewing-selection input by the reviewing user.

4. The apparatus of any preceding claim, wherein the apparatus is caused to provide for the sending of a review request message to the reviewing user based on a determination that the reviewing user is not reviewing the proposed modifications made to the virtual reality content.

5. The apparatus of claim 2, wherein the or each modification graphic comprises a user interface element comprising one or more of;
i) a diagrammatic visual representation of at least one of the proposed modifications;
ii) a user interface element for receiving a virtual user input to provide for one or more of approval or rejection of each proposed modification;
iii) a user interface element for receiving virtual user input to provide for further modification of each proposed modification.

6. The apparatus of any preceding claim, wherein prior to providing for presentation of the virtual reality content to the reviewing user, the apparatus is further configured to provide for creation of the capture property modification data based on user input by a modifying user, the modifying user provided with one or more of:
i) a live virtual reality view of the scene as the virtual reality content is captured;
ii) a virtual reality view of the scene following the virtual reality content being captured;
iii) a live augmented reality view of the scene, augmented with at least audio captured by one or more audio capture devices present in the scene configured for capturing the audio of the virtual reality content; and
iv) an augmented reality view of the scene following the virtual reality content being captured, augmented with at least audio captured by one or more audio capture devices present in the scene configured for capturing the audio of the virtual reality content.

7. The apparatus of claim 2, wherein following the approval of one or more of the proposed modifications, provide for generation of modified virtual reality content based on the virtual reality content and the proposed modifications approved by the reviewing user, the modified virtual reality content comprising the virtual reality content with the approved modifications having been made thereto.

8. The apparatus of any preceding clam, wherein the one or more proposed modifications include modification to the audio of the virtual reality content comprising one or more of volume; bass; treble; a spatial extent in the virtual reality space when the audio is spatial audio having associated therewith an origin direction comprising the direction from which the audio is perceived to originate when provided for audible presentation.

9. The apparatus of any preceding clam, wherein the one or more proposed modifications include modification to the visual imagery of the virtual reality content comprising one or more of brightness in a localised area of the visual imagery; brightness of the whole spatial extent of the visual imagery; contrast in a localised area of the visual imagery; contrast of the whole spatial extent of the visual imagery; and computer-generated imagery in a localised area or whole visual extent of video imagery.

10. The apparatus of claim 7, wherein the modified virtual reality content is provided for one or more of live broadcast and live streaming.

11. The apparatus of any preceding claim, wherein a virtual reality view is presented to the reviewing user that provides for viewing of the video imagery of the virtual reality content, the virtual reality view comprising a spatial portion of the video imagery being smaller in spatial extent than the spatial extent of the video imagery, and wherein based on at least one of the modification graphics being positioned outside the current virtual reality view of the reviewing user, provide for display of a direction-to-modification graphic indicative of at least the direction the reviewing user is required to move the virtual reality view to see the modification graphic in the virtual reality view.

12. The apparatus of claim 11, wherein the direction-to-modification graphic comprises one or more of;
an arrow;
an marker at an edge of the current virtual reality view;
a map comprising a plan view of the virtual reality space showing the reviewing user, a current direction of the virtual reality view and the location of the modification graphic.

13. A method, the method comprising
based on virtual reality content comprising visual imagery and audio of a scene for presentation in virtual reality to provide a virtual reality space in which the visual imagery is to be displayed to represent the scene, and capture property modification data comprising information indicative of one or more proposed modifications to be applied to the virtual reality content for subsequent viewing in virtual reality, the one or more modifications relating to one or more of an aural presentation of at least a part of the audio and a visual presentation of at least part of the visual imagery of the virtual reality content, the capture property modification data further comprising, for each of the one or more modifications, information indicative of a modification time comprising a time at which the proposed modification has effect in the virtual reality content, and a virtual location in the virtual reality space affected by the modification;
providing for presentation of the virtual reality content in virtual reality to a reviewing user with the proposed modifications defined by the capture property modification data at least reversibly made to the virtual reality content and, to enable the one or more proposed modifications to be reviewed by the reviewing user, providing for presentation of one or more modification graphics indicative of the proposed modifications, the one or more modification graphics temporally presented based on the modification time and visually positioned in the virtual reality space in accordance with the virtual location.

14. A computer readable medium comprising computer program code stored thereon, the computer readable medium and computer program code being configured to, when run on at least one processor, perform the method of:
based on virtual reality content comprising visual imagery and audio of a scene for presentation in virtual reality to provide a virtual reality space in which the visual imagery is displayed to represent the scene, and capture property modification data comprising information indicative of one or more proposed modifications to be applied to the virtual reality content for subsequent viewing in virtual reality, the one or more modifications relating to one or more of an aural presentation of at least a part of the audio and a visual presentation of at least part of the visual imagery of the virtual reality content, the capture property modification data further comprising, for each of the one or more modifications, information indicative of a modification time comprising a time at which the proposed modification has effect in the virtual reality content, and a virtual location in the virtual reality space affected by the modification;
providing for presentation of the virtual reality content in virtual reality to a reviewing user with the proposed modifications defined by the capture property modification data at least reversibly made to the virtual reality content and, to enable the one or more proposed modifications to be reviewed by the reviewing user, providing for presentation of one or more modification graphics indicative of the proposed modifications, the one or more modification graphics temporally presented based on the modification time and visually positioned in the virtual reality space in accordance with the virtual location.

15. An apparatus comprising:
at least one processor; and
at least one memory including computer program code,
the at least one memory and the computer program code configured to, with the at least one processor, cause the apparatus to perform at least the following:
in respect of virtual reality content comprising visual imagery and audio of a scene for presentation in virtual reality to provide a virtual reality space in which the visual imagery is displayed to represent the scene;
based on user input from a modifying user, the user input indicative of one or more modifications relating to one or more of an aural presentation of at least a part of the audio and a visual presentation of at least part of the visual imagery of the virtual reality content,
provide for generation of capture property modification data comprising information indicative of one or more proposed modifications to be at least reversibly applied to the virtual reality content for subsequent viewing in virtual reality, the capture property modification data further comprising, for each of the one or more modifications, information indicative of a modification time, relative to the virtual reality content, at which the proposed modification has effect and a virtual location in the virtual reality space affected by the modification, the virtual reality content and capture property modification data for subsequent review by a reviewing user.
